# EUROPEAN PATENT APPLICATION

(11) **EP 4 749 847 A1**
(43) Date of publication of application: **27.05.2026**
(21) Application number: 25305275.7
(22) Date of filing: 28.02.2025
(51) Int. Cl.: H02B 11/133, H02B 11/173

(54) **INTERLOCKING APPARATUS FOR DRAWER CABINET AND DRAWER CABINET**

(30) Priority: 21.11.2024 CN 202422854136 U
(71) Applicant: Schneider Electric Industries SAS, 92500 Rueil-Malmaison (FR)
(72) Inventor: Zhou, Huidong, Shanghai, 201203 (CN); Gao, Xiaochun, Shanghai, 201203 (CN)
(74) Representative: Manitz Finsterwald Patent- und Rechtsanwaltspartnerschaft mbB

(57) **Abstract**

The embodiment of the present disclosure provides an interlocking apparatus for a drawer cabinet and the drawer cabinet. The interlocking apparatus comprises a bracket (2) coupled to a bottom surface of the drawer (7); a driving plate (3) adapted to slide in a first direction from a locking position to an unlocking position; a locking plate (4) arranged between a fixing portion (6) and the drawer (7) and partially inserted into a fixing hole (61) of the fixing portion (6), the locking plate (4) being slidably connected to the bracket (2) and adapted to slide along a second direction under pushing of the driving plate (3); and a blocking plate (5) coupled to the bracket (2) and shielding a handle insertion hole (71) of a rocker mechanism of the drawer cabinet, the blocking plate (5) being adapted to slide in a third direction under the pushing of the driving plate (3) during the sliding of the driving plate (3) from the locking position to the unlocking position.

## Description

### FIELD

Example embodiments of the present disclosure generally relate to the field of electrical equipment, and in particular, to an interlocking apparatus for a drawer cabinet and a drawer cabinet.

### BACKGROUND

The drawer cabinet is power distribution equipment comprises a cabinet body frame, drawer units, a bus system, and an operating mechanism, etc. It adopts a drawer-type modular design and has the characteristics of high safety, good flexibility, and easy maintenance. It is widely applied to the fields of industry, building electrical, power systems, and the like.

### SUMMARY

In a first aspect of the present disclosure, an interlocking apparatus for a drawer cabinet is provided. The interlocking apparatus comprises a bracket arranged within a drawer of the drawer cabinet and comprising a body coupled to a bottom surface of the drawer, the bottom surface of the drawer being adjacent to a fixing portion of the drawer cabinet; a driving plate movably coupled to the bracket and adapted to slide in a first direction from a locking position to an unlocking position; a locking plate arranged between the fixing portion and the drawer and partially inserted into a fixing hole of the fixing portion, the locking plate being slidably connected to the bracket and adapted to slide along a second direction under pushing of the driving plate during sliding of the driving plate from the locking position to the unlocking position to exit the fixing hole of the fixing portion, a first predetermined angle being formed between the second direction and the first direction; and a blocking plate movably coupled to the bracket and at least partially shielding a handle insertion hole of a rocker mechanism of the drawer cabinet, the blocking plate being adapted to slide in a third direction under the pushing of the driving plate during the sliding of the driving plate from the locking position to the unlocking position, so as to move from a shielding position where the blocking plate at least partially shields the handle insertion hole to an exposure position where the handle insertion hole exposed, a second predetermined angle being formed between the third direction and the first direction.

In some embodiments, the bracket further comprises: at least one first sliding hole formed on the body and arranged with its axis direction parallel to the first direction, the at least one first sliding hole being adapted to at least partially accommodate the driving plate to allow the driving plate to slide within the first sliding hole in the first direction.

In some embodiments, the bracket further comprises: at least one second sliding hole formed on the body and arranged with its axis direction parallel to the second direction, the at least one second sliding hole being adapted to at least partially accommodate the locking plate to allow the locking plate to slide within the second sliding hole in the second direction.

In some embodiments, the bracket further comprises: a first slideway formed on the body and extending in the third direction; and a first step screw arranged within the first slideway and coupled to the locking plate such that the locking plate approaches or moves away from the fixing hole in the third direction.

In some embodiments, the driving plate comprises: a second slideway comprising an unlocking end and a locking end, wherein a distance between the unlocking end and the fixing portion exceeds a distance between the locking end and the fixing portion; and wherein the first step screw is arranged in the second slideway and is adapted to move from the locking end to the unlocking end of the second slideway during sliding of the driving plate from the locking position to the unlocking position.

In some embodiments, the interlocking apparatus further comprises: a spring arranged between the driving plate and the bracket, and wherein one end of the spring is coupled to the driving plate and the other end is coupled to the bracket.

In some embodiments, the driving plate further comprises: a mounting post extending in the first direction and at least partially passing through the spring.

In some embodiments, the bracket further comprises: at least one third sliding hole formed on the body and arranged with its axis parallel to the third direction, the at least one third sliding hole being adapted to at least partially accommodate the blocking plate to allow sliding of the blocking plate in the third direction.

In some embodiments, the blocking plate comprises: a third slideway, an extending direction of the third slideway having a predetermined non-zero angle with the first direction and the third direction, the third slideway comprising a shielding end and an exposed end; and a second step screw arranged within the third slideway and coupled to the driving plate, the second step screw being adapted to move from the shielding end to the exposed end of the third slide during sliding of the driving plate from the locking position to the unlocking position.

According to the embodiments of the present disclosure, the locking plate of the interlocking apparatus is adapted to fix the drawer to the fixing portion of the drawer cabinet, and the blocking plate is adapted to limit the action of the rocker mechanism of the drawer cabinet. In this way, the interlocking apparatus achieves interlocking of the drawer, and the electrical safety of the drawer cabinet is improved. If the user presses the driving plate, through the linkage between the driving plate, the locking plate, and the blocking plate, the locking plate exits the fixing hole of the fixing portion of the drawer cabinet, and the blocking plate moves to expose the handle insertion hole. Therefore, the interlocking apparatus can quickly and conveniently release the interlock, and the user can conveniently maintain and install the drawer cabinet.

In a second aspect of the present disclosure, a drawer cabinet is provided. The drawer cabinet comprises a cabinet body; a fixing portion fixedly coupled to the cabinet body; a drawer arranged on the fixing portion and slidably connected to the fixing portion; a rocker mechanism arranged between the fixing portion and the drawer and adapted to drive the drawer to slide relative to the fixing portion; and the interlocking apparatus provided by the first aspect of the present disclosure and adapted to at least partially shield a handle insertion hole of the rocker mechanism during locking of the drawer with the fixing portion.

It should be understood that content described in this content section is not intended to limit key features or important features of embodiments of the present disclosure, nor is it intended to limit the scope of the present disclosure. Other features of the present disclosure will be readily understood from the following description.

### BRIEF DESCRIPTION OF DRAWINGS

The above and other features, advantages and aspects of various embodiments of the present disclosure will become more apparent with reference to the following detailed description taken in conjunction with the accompanying drawings. In the drawings, the same or similar reference numerals denote the same or similar elements, wherein:
FIG. 1 illustrates a partial structural schematic view of a drawer cabinet according to some embodiments of the present disclosure;
FIG. 2 illustrates a schematic view of an interlocking apparatus inside a drawer in a locked state according to some embodiments of the present disclosure;
FIG. 3 illustrates a schematic view of a fixing portion of a drawer cabinet according to some embodiments of the present disclosure;
FIG. 4 illustrates a schematic view of an interlocking apparatus inside a drawer in an unlocked state according to some embodiments of the present disclosure;
FIG. 5 illustrates an overall structure view of an interlocking apparatus in a locked state according to some embodiments of the present disclosure;
FIG. 6 illustrates an overall structure view of an interlocking apparatus in an unlocked state according to some embodiments of the present disclosure;
FIG. 7 illustrates an exploded view of an interlocking apparatus according to some embodiments of the present disclosure; and
FIG. 8 illustrates a schematic view of an interlocking apparatus according to some embodiments of the present disclosure from other viewing angles.

### DETAILED DESCRIPTION

Embodiments of the present disclosure will be described in more detail below with reference to the accompanying drawings. While certain embodiments of the disclosure are illustrated in the drawings, it should be understood that the present disclosure may be embodied in various forms and should not be construed as limited to the embodiments set forth herein, but rather, these embodiments are provided for a thorough and complete understanding of the present disclosure. It should be understood that the drawings and embodiments of the present disclosure are only used for example, and are not intended to limit the protection scope of the present disclosure.

It should be noted that the headings of any section / subsection provided herein are not limiting. Various embodiments are described throughout herein, and any type of embodiment can be included under any section / subsection. Further, embodiments described in any section / subsection may be combined in any manner with any other embodiments described in the same section / subsection and / or different section / subsection.

In the description of the embodiments of the present disclosure, the term "comprising" and similar terms thereof should be understood as open-ended inclusion, that is, "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," etc. may refer to different or identical objects. Other explicit and implicit definitions may also be included below.

As mentioned briefly above, in conventional technology, some drawer units of drawer cabinets achieve movement in and out of a cabinet body frame through a rocker mechanism. Specifically, the rocker mechanism comprises a spiral groove cam arranged in the drawer and a driving piece coupled to the cabinet body frame. A driving groove is formed on the side of the driving piece facing the spiral groove cam, and the driving groove is in threaded fit with the spiral groove of the spiral groove cam. Therefore, during rotation of the spiral groove cam, the drawer unit can move in and out relative to the cabinet body frame through cooperation of the driving part and the spiral groove cam. In order to ensure electrical safety, it is required that the drawer (i.e., the drawer unit) of the drawer cabinet can be interlocked with the cabinet body frame, that is, during locking of the drawer and the cabinet body frame, the rocker mechanism cannot drive the drawer to exit the cabinet body frame. A traditional drawer cabinet adopts an interlocking structure of a sliding plate, and the operation is tedious during unlocking operation.

Embodiments of the present disclosure provide an interlocking apparatus for the drawer cabinet and a drawer cabinet to solve or at least partially solve the above mentioned problems and other potential problems existing in conventional solutions. According to some embodiments of the present disclosure, the driving plate of the interlocking apparatus is linked with the locking plate and the blocking plate, respectively, and the driving plate can slide between the locking position and the unlocking position under operation of a user. If the driving plate is in the locking position, the locking plate is inserted into the fixing hole of the fixing portion. In addition, the blocking plate at least partially shields the handle insertion hole of the rocker mechanism, in this way, the blocking plate can limit the rotation handle of the rocker mechanism from being inserted into the handle insertion hole, thereby limiting the operation of the rocker mechanism. In this way, the interlocking apparatus achieves interlocking of the rocker mechanism during locking of the drawer and the fixing portion, thereby improving the electrical safety of the drawer cabinet.

If the user presses the driving plate, the driving plate slides from the locking position to the unlocking position, and the driving plate can drive the locking plate to exit the fixing hole of the fixing portion of the drawer cabinet through the linkage between the driving plate and the locking plate. Through linkage of the driving plate and the blocking plate, the driving plate can also push the blocking plate to slide along the third direction, so that the handle insertion hole of the rocker mechanism on the drawer is exposed, the rotating handle of the rocker mechanism can be inserted into the handle insertion hole to allow the rocker mechanism to operate and drive the drawer to exit the fixing portion of the drawer cabinet. Therefore, the interlocking apparatus quickly and conveniently releases the interlocking under the operation of a user, and the user can conveniently maintain and install the drawer cabinet.

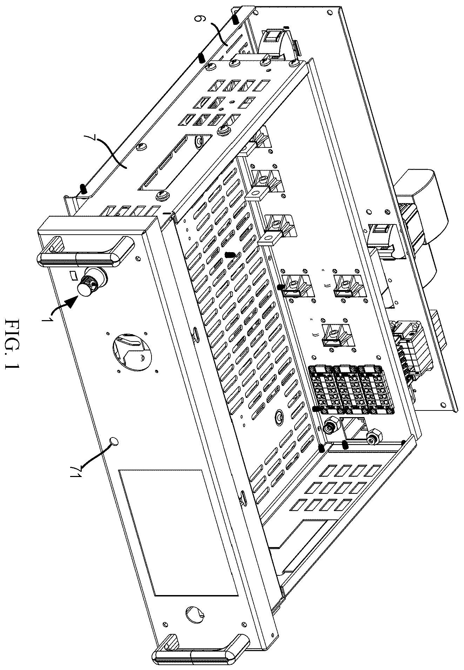

FIG. 1 illustrates a partial structural schematic view of a drawer cabinet according to some embodiments of the present disclosure. As shown in FIG. 1, the drawer cabinet generally includes a cabinet body frame, at least one fixing portion 6 coupled to the cabinet body frame, and at least one drawer 7 coupled to the fixing portion 6. In some embodiments, the drawer cabinet can include a plurality of fixing portions 6, the plurality of fixing portions 6 are arranged in the cabinet body frame along the gravity direction, a predetermined interval is reserved between two adjacent fixing portions 6, and the plurality of drawers 7 can be respectively arranged in the interval between two adjacent fixing portions 6.

In some embodiments, the drawer 7 can slide on the fixing portion 6 in a predetermined direction (for example, a depth direction of the drawer cabinet perpendicular to the user side) to enter or leave a predetermined position (for example, an operation position, a detection position, or a disconnection position), in some embodiments, a side of the fixing portion 6 facing the drawer 7 can further be provided with a slideway, and the slideway extends in the depth direction. Correspondingly, the side of the drawer 7 facing the fixing portion 6 is provided with a sliding groove 62 matched with the slideway. The drawer 7 can slide relative to the fixing portion 6 more stably along the depth direction through the cooperation of the slideway and the sliding groove 62. In some embodiments, the user can control the drawer 7 to slide in the depth direction to be close to or away from the user.

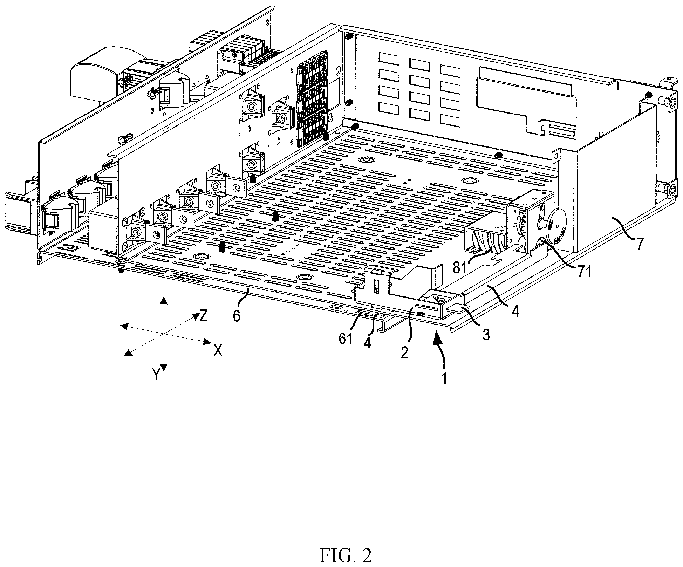

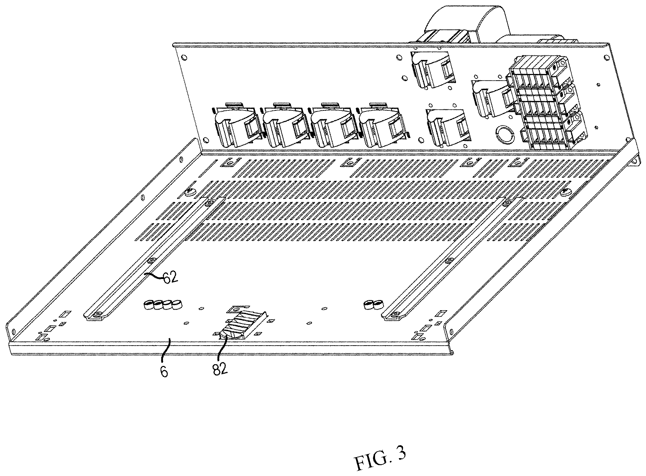

FIG. 2 illustrates a schematic view of an interior of a drawer 7 according to some embodiments of the present disclosure, and FIG. 3 illustrates a schematic view of a fixing portion 6 of a drawer cabinet according to some embodiments of the present disclosure. As shown in FIG. 2 and FIG. 3, the drawer cabinet further includes a rocker mechanism, and the rocker mechanism is arranged between the drawer 7 and the fixing portion 6, and is adapted to drive the drawer 7 to slide relative to the fixing portion 6, so as to enable the drawer 7 to enter and exit the cabinet body frame. In some embodiments, the rocker mechanism includes a spiral groove cam 81 arranged within the drawer 7 and a driving member 82 arranged at the fixing portion 6. The spiral groove cam 81 is rotatably coupled to the bottom surface of the drawer 7 close to the fixing portion 6. The partial circumferential surface of the spiral groove, which is towards one side of the fixing portion 6, protrudes from the bottom surface of the drawer 7 and cooperates with the driving groove of the driving member 82. In this way, during the rotation of the spiral groove cam 81 about the axis, the drawer 7 can slide relative to the fixing portion 6 in the depth direction through the cooperation of the spiral groove cam 81 and the driving member 82.

In some embodiments, the rocker mechanism further includes a rotating handle 83 detachably coupled to the spiral groove cam 81 to drive the spiral groove cam 81 to rotate about the axis. In some embodiments, the drawer 7 is further provided with a handle insertion hole 71, and the rotating handle 83 can pass through the handle insertion hole 71 and be coupled to the spiral groove cam 81.

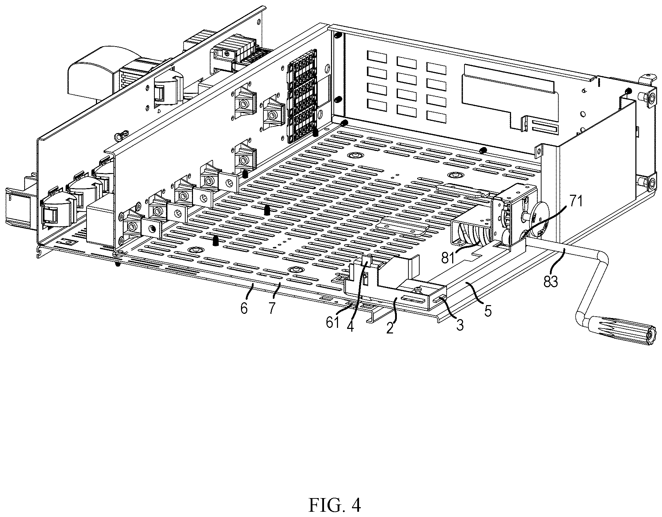

FIG. 2 also shows the interlocking apparatus in a locked state according to some embodiments of the present disclosure, and FIG. 4 shows a schematic view of the interlocking apparatus in an unlocked state according to some embodiments of the present disclosure. As shown in FIGS. 2 and 4, the interlocking apparatus 1 is arranged in the drawer 7 and is adapted to switch to an interlocked state after the drawer 7 moves to a predetermined position. In the interlocked state, the interlocking apparatus 1 can lock the drawer 7 with the fixing portion 6 while locking the rocker mechanism. The interlocking apparatus 1 can restrict the drawer 7 from sliding relative to the fixing portion 6 and also restrict the rotating handle 83 from driving the spiral groove cam 81 to rotate.

In some embodiments, one side of the fixing portion 6 facing the drawer 7 is provided with a plurality of fixing holes 61, and the plurality of fixing holes 61 respectively correspond to a plurality of predetermined positions of the drawer 7. During the interlocking apparatus 1 being in interlocked state, a portion of the interlocking apparatus 1 can be inserted into the fixing hole 61 to fix the drawer 7 with the fixing portion 6. In this way, the drawer 7 can be stably held in a predetermined position (e.g., an operation position, a test position or a disconnection position, etc.). If the interlocking apparatus 1 is in the unlocked state, the interlocking apparatus 1 can expose the handle insertion hole 71 of the drawer 7 such that the rotating handle 83 can be inserted into the handle insertion hole 71 and coupled with the spiral groove cam 81.

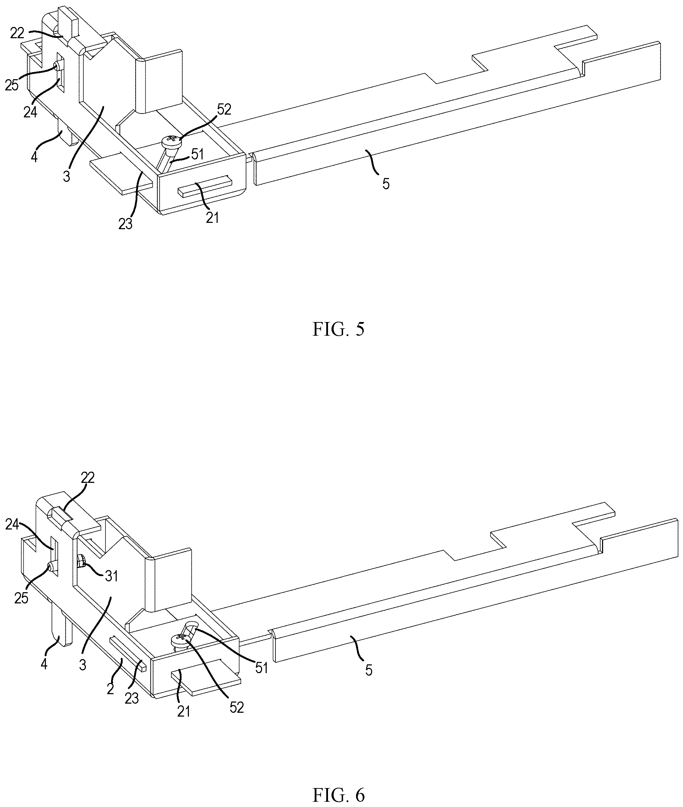

FIG. 5 and FIG. 6 respectively show overall structural schematic views of the interlocking apparatus 1 in a locked state and an unlocked state according to some embodiments of the present disclosure. As shown in FIG. 5 and FIG. 6, the interlocking apparatus 1 includes a bracket 2, a driving plate 3 slidably connected to the bracket 2 along a first direction X, a locking plate 4 slidably connected along a second direction Y, and a blocking plate 5 slidably connected along a third direction Z. There is a first predetermined angle between the first direction X and the second direction Y, and there is a second predetermined angle between the first direction X and the third direction Z.

As shown in FIG. 2, in some embodiments, the first direction X, the second direction Y, and the third direction Z can be perpendicular to each other. For example, the first direction X can be a horizontal direction parallel to the sliding direction (i.e., the depth direction) of the drawer 7, the second direction Y can be a horizontal direction perpendicular to the first direction X, and the third direction Z can be other horizontal directions perpendicular to the depth direction. In some other embodiments, the second direction Y and the third direction Z can be parallel to each other (that is, the angle between the second direction Y and the third direction Z can be zero degrees), and the second direction Y and the third direction Z can also be inclined relative to each other(that is, the second direction Y and the third direction Z can have a non-zero angle).

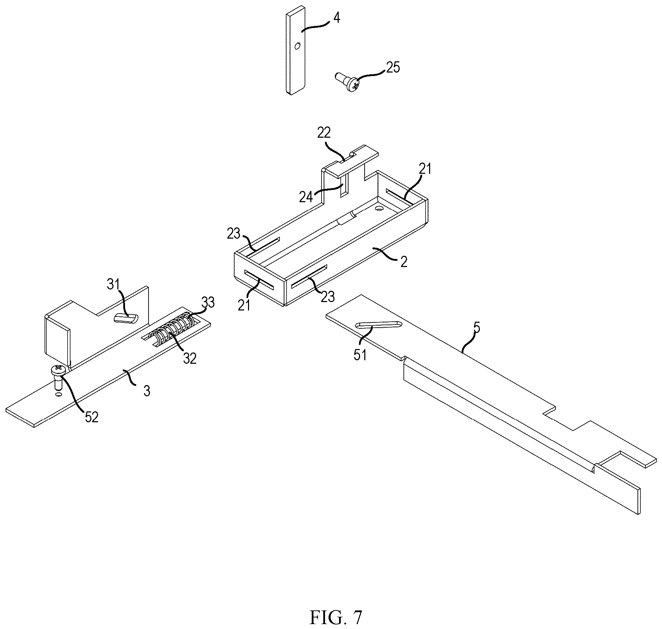

FIG. 7 illustrates an exploded view of an interlocking apparatus according to some embodiments of the present disclosure. As shown in FIG. 7, in some embodiments, the bracket 2 includes a body coupled to a bottom wall of the drawer 7, the body is provided with at least one first sliding hole 21, and the axis of the at least one first sliding hole 21 extends along the first direction X. In some embodiments, the at least one first sliding hole 21 includes two first sliding holes 21, and the driving plate 3 passes through the two first sliding holes 21, so that the driving plate 3 slides in the first direction X in the two first sliding holes 21.

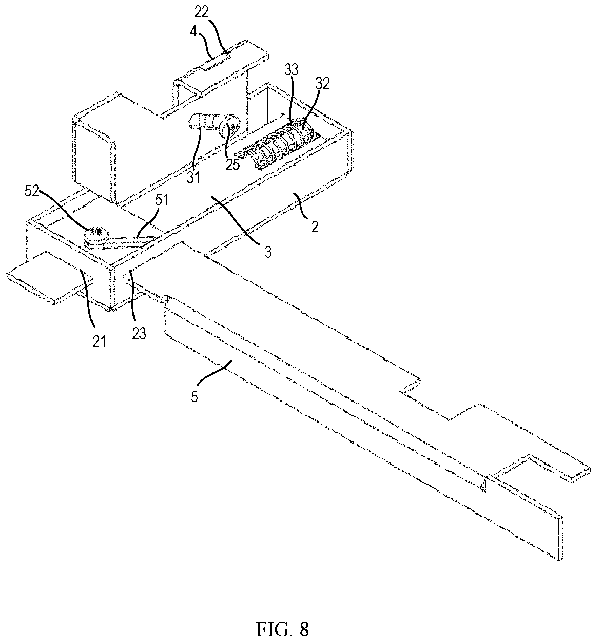

FIG. 8 is a schematic view of an interlocking apparatus according to some embodiments of the present disclosure from other perspective. As shown in FIG. 7 and FIG. 8, in some embodiments, the interlocking apparatus further includes a spring 33. The spring 33 is arranged between the bracket 2 and the driving plate 3 and is adapted to provide an elastic force to the driving plate 3, so that the driving plate 3 can be maintained in the locking position when not operated by the user. For example, the spring 33 can be compressed during sliding of the driving plate 3 from the locking position to the unlocking position under the user's operation. After the user's operation ends, the spring 33 pushes the driving plate 3 to return from the unlocking position to the locking position. In some embodiments, the driving plate 3 includes a mounting post 32 extending along the first direction X, and the spring 33 can be sleeved on the mounting post 32. In this way, the stability of the spring 33 providing the elastic force to the driving plate 3 can be improved.

As shown in FIG. 7, in some embodiments, the body is further provided with at least one second sliding hole 22, and the axis of the at least one second sliding hole 22 extends along the second direction Y. In some embodiments, the body is provided with two second sliding holes 22, the locking plate 4 passes through the two second sliding holes 22, and the locking plate 4 can slide along the second direction Y in the two second sliding holes 22.

In some embodiments, the bracket 2 further includes a first slideway 24 and a first step screw 25 arranged within the first slideway 24. The first slideway 24 is formed on the body and extends along the first direction X. The first step screw 25 is coupled to the locking plate 4, and the first step screw 25 can drive the locking plate 4 to slide along the first direction X by limiting the first slideway 24.

In some embodiments, the body further includes at least one third sliding hole 23, and an axis of the at least one third sliding hole 23 extends along the third direction Z. In some embodiments, the body is provided with two third sliding holes 23, and the blocking plate 5 passes through the two third sliding holes 23, so that the blocking plate 5 can slide along the third direction Z in the two third sliding holes 23.

The driving plate 3 is respectively coupled to the locking plate 4 and the blocking plate 5, so that when the driving plate 3 is operated by a user and slide from the locking position to the unlocking position, the driving plate 3 can drive the locking plate 4 to slide in the second direction Y from a position where the driving plate 3 is partially inserted into the fixing hole 61 and exit the fixing hole 61, and the driving plate 3 can also drive the blocking plate 5 to move in the third direction Z from a shielding position where the blocking plate 5 at least partially shields the handle insertion hole 71 to an exposed position where the handle insertion hole 71 is exposed. In this way, the interlocking apparatus can switch from the interlocked state to the unlocked state under the user's operation (for example, pushing the driving plate 3 in the first direction X to slide the driving plate 3 from the locking position to the unlocking position). Thus, while unlocking the drawer 7 and the fixing portion 6, the handle insertion hole 71 is exposed so that the rotating handle 83 is inserted into the handle insertion hole 71.

As shown in FIG. 7, in some embodiments, the driving plate 3 includes a second slideway 31. The second slideway 31 is arranged close to the locking plate 4 and includes an unlocking end and a locking end. The first step screw 25 is at least partially arranged within the second slideway 31. The distance from the unlocking end to the fixing portion 6 is greater than the distance from the locking end to the fixing portion 6. In this way, the first step screw 25 moves from the locking end of the second slideway 31 to the unlocking end of the second slideway 31 during the sliding of the driving plate 3 from the locking position to the unlocking position. Thus, the locking plate 4 exits the fixing hole 61 in the second direction Y. If the driving plate 3 slides along the first direction X from the unlocking position to the locking position, the first step screw 25 moves from the unlocking end of the second slideway 31 to the locking end of the second slideway 31, and the first step screw 25 drives the locking plate 4 to be partially inserted into the fixing hole 61.

As shown in FIG. 7, in some embodiments, a third slideway 51 is formed on the blocking plate 5, and the extending direction of the third slide 51 has a predetermined non-zero angle with the first direction X and with the third direction Z, respectively. In some embodiments, the extending direction of the third slideway 51 can be within the angle formed by the first direction X and the third direction Z. For example, the extending direction of the third slideway 51 can lie along an angular bisector of the angle formed by the first direction X and the third direction Z. The third slideway 51 includes a shielded end and an exposed end. A second step screw 52 is arranged within the third slideway 51. The second step screw 52 is coupled to the driving plate 3 thus, when the driving plate 3 slides from the locking position to the unlocking position, the second step screw 52 moves from the shielding end to the exposed end of the third slideway 51 and drives the blocking plate 5 to slide along the third direction Z, so that the blocking plate 5 moves from the shielding position where the blocking plate 5 at least partially shields the handle insertion hole 71 to the exposed position where the handle insertion hole 71 is exposed.

Implementations of the present disclosure have been described above, and the above description is exemplary, not exhaustive, and is not limited to the disclosed implementations. Many modifications and alterations will be apparent to those of ordinary skill in the art without departing from the scope and spirit of the illustrated implementations. The selection of terms as used herein is intended to best explain the principles of various implementations, practical applications or improvements to technology in the market, or to enable others of ordinary skill in the art to understand various implementations disclosed herein.

## Claims

1. An interlocking apparatus for a drawer cabinet, **characterized by** comprising:
a bracket (2) arranged within a drawer (7) of the drawer cabinet and comprising a body coupled to a bottom surface of the drawer (7), the bottom surface of the drawer (7) being adjacent to a fixing portion (6) of the drawer cabinet;
a driving plate (3) movably coupled to the bracket (2) and adapted to slide in a first direction (X) from a locking position to an unlocking position;
a locking plate (4) arranged between the fixing portion (6) and the drawer (7) and partially inserted into a fixing hole (61) of the fixing portion (6), the locking plate (4) being slidably connected to the bracket (2) and adapted to slide along a second direction (Y) under pushing of the driving plate (3) during sliding of the driving plate (3) from the locking position to the unlocking position to exit the fixing hole (61) of the fixing portion (6), a first predetermined angle being formed between the second direction (Y) and the first direction (X); and
a blocking plate (5) movably coupled to the bracket (2) and at least partially shielding a handle insertion hole (71) of a rocker mechanism of the drawer cabinet, the blocking plate (5) being adapted to slide in a third direction (Z) under the pushing of the driving plate (3) during the sliding of the driving plate (3) from the locking position to the unlocking position, so as to move from a shielding position where the blocking plate (5) at least partially shields the handle insertion hole (71) to an exposure position where the handle insertion hole (71) is exposed, a second predetermined angle being formed between the third direction (Z) and the first direction (X).

2. The interlocking apparatus of claim 1, **characterized in that** the bracket (2) further comprises:
at least one first sliding hole (21) formed on the body and arranged with its axis direction parallel to the first direction (X), the at least one first sliding hole (21) being adapted to at least partially accommodate the driving plate (3) to allow the driving plate (3) to slide within the first sliding hole (21) in the first direction (X).

3. The interlocking apparatus of claim 1, **characterized in that** the bracket (2) further comprises:
at least one second sliding hole (22) formed on the body and arranged with its axis direction parallel to the second direction (Y), the at least one second sliding hole (22) being adapted to at least partially accommodate the locking plate (4) to allow the locking plate (4) to slide within the second sliding hole (22) in the second direction (Y).

4. The interlocking apparatus of claim 1, **characterized in that** the bracket (2) further comprises:
a first slideway (24) formed on the body and extending in the third direction (Z); and
a first step screw (25) arranged within the first slideway (24) and coupled to the locking plate (4) such that the locking plate (4) approaches or moves away from the fixing hole (61) in the third direction (Z).

5. The interlocking apparatus of claim 4, **characterized in that** the driving plate (3) comprises:
a second slideway (31) comprising an unlocking end and a locking end, wherein a distance between the unlocking end and the fixing portion (6) exceeds a distance between the locking end and the fixing portion (6); and
wherein the first step screw (25) is arranged in the second slideway (31) and is adapted to move from the locking end to the unlocking end of the second slideway (31) during sliding of the driving plate (3) from the locking position to the unlocking position.

6. The interlocking apparatus of claim 1-4, **characterized by** further comprising:
a spring (33) arranged between the driving plate (3) and the bracket (2), and wherein one end of the spring (33) is coupled to the driving plate (3) and the other end is coupled to the bracket (2).

7. The interlocking apparatus of claim 6, **characterized in that** the driving plate (3) further comprises:
a mounting post (32) extending in the first direction (X) and at least partially passing through the spring (33).

8. The interlocking apparatus of claim 1, **characterized in that** the bracket (2) further comprises:
at least one third sliding hole (23) formed on the body and arranged with its axis parallel to the third direction (Z), the at least one third sliding hole (23) being adapted to at least partially accommodate the blocking plate (5) to allow sliding of the blocking plate (5) in the third direction (Z).

9. The interlocking apparatus of claim 1, **characterized in that** the blocking plate (5) comprises:
a third slideway (51), an extending direction of the third slideway (51) having a predetermined non-zero angle with the first direction (X) and the third direction (Z), the third slideway (51) comprising a shielding end and an exposed end; and
a second step screw (52) arranged within the third slideway (51) and coupled to the driving plate (3), the second step screw (52) being adapted to move from the shielding end to the exposed end of the third slide (51) during sliding of the driving plate (3) from the locking position to the unlocking position.

10. A drawer cabinet, **characterized by** comprising:
a cabinet body;
a fixing portion (6) fixedly coupled to the cabinet body;
a drawer (7) arranged on the fixing portion (6) and slidably connected to the fixing portion (6);
a rocker mechanism arranged between the fixing portion (6) and the drawer (7) and adapted to drive the drawer (7) to slide relative to the fixing portion (6); and
the interlocking apparatus of any of claims 1-9 coupled to the drawer (7) and adapted to at least partially shield a handle insertion hole (71) of the rocker mechanism during locking of the drawer (7) with the fixing portion (6).
